(19) **Europäisches Patentamt**
**European Patent Office**
**Office européen des brevets**

(11) **EP 3 759 533 B1**

(12) **FASCICULE DE BREVET EUROPEEN**

(45) Date de publication et mention
de la délivrance du brevet:
**24.04.2024 Bulletin 2024/17**

(51) Classification Internationale des Brevets (IPC):
**G02B 6/24** *(2006.01)* **H04B 10/2581** *(2013.01)*

(52) Classification Coopérative des Brevets (CPC):
**G02B 6/2848;** G02B 6/04

(21) Numéro de dépôt: **19711994.4**

(22) Date de dépôt: **26.02.2019**

(86) Numéro de dépôt international:
**PCT/FR2019/050433**

(87) Numéro de publication internationale:
**WO 2019/162637 (29.08.2019 Gazette 2019/35)**

(54) **PROCÉDÉ DE CONCEPTION D'UN DISPOSITIF DE CONVERSION MULTIPLAN, LAME DE PHASE OBTENUE PAR L'INTERMÉDIAIRE DE CE PROCÉDÉ, ET DISPOSITIF DE CONVERSION MULTIPLAN**

VERFAHREN ZUM ENTWURF EINER MEHREBENEN-UMWANDLUNGSVORRICHTUNG, NACH DIESEM VERFAHREN ERHALTENE PHASENPLATTE UND MEHREBENEN-UMWANDLUNGSVORRICHTUNG

METHOD FOR DESIGNING A MULTI-PLANE CONVERSION DEVICE, PHASE PLATE OBTAINED BY THIS METHOD, AND MULTI-PLANE CONVERSION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2018 FR 1851664**

(43) Date de publication de la demande:
**06.01.2021 Bulletin 2021/01**

(73) Titulaire: **Cailabs**
**35200 Rennes (FR)**

(72) Inventeur: **PINEL, Olivier**
**35000 RENNES (FR)**

(74) Mandataire: **IP Trust**
**2, rue de Clichy**
**75009 Paris (FR)**

(56) Documents cités:
- **PAULINE BOUCHER ET AL: "Continuous axial scanning of a Gaussian beam via beam steering", OPTICS EXPRESS, vol. 25, no. 19, 12 septembre 2017 (2017-09-12), page 23060, XP055538476, DOI: 10.1364/OE.25.023060**
- **SAAD RAWAD ET AL: "Highly Selective 7 Orbital Angular Momentum Mode Multiplexer Based on Multi-Plane Light Conversion", 2017 EUROPEAN CONFERENCE ON OPTICAL COMMUNICATION (ECOC), IEEE, 17 septembre 2017 (2017-09-17), pages 1-3, XP033336216, DOI: 10.1109/ECOC.2017.8345890**
- **FONTAINE NICOLAS K ET AL: "Design of High Order Mode-Multiplexers using Multiplane Light Conversion", 2017 EUROPEAN CONFERENCE ON OPTICAL COMMUNICATION (ECOC), IEEE, 17 septembre 2017 (2017-09-17), pages 1-3, XP033336455, DOI: 10.1109/ECOC.2017.8346129 cité dans la demande**

**Description**

**DOMAINE DE L'INVENTION**

La présente invention concerne un procédé de conception d'un dispositif de conversion multiplan. Elle concerne également une lame de phase et un dispositif de conversion multiplan obtenus par l'intermédiaire de ce procédé.

**ARRIERE PLAN TECHNOLOGIQUE DE L'INVENTION**

On connaît de US9250454 et US2017010463 des tels dispositifs optiques, ainsi que des méthodes permettant de les concevoir. Ces dispositifs (souvent désignés par l'acronyme MPLC, de « Multi Plane Light Conversion » selon l'expression anglo-saxonne) permettent de réaliser toute transformation spatiale unitaire d'un rayonnement lumineux.

D'un point de vue théorique, et comme cela a été établi dans « Programmable unitary spatial mode manipulation », Morizur et AI, J. Opt. Soc. Am. A/Vol. 27, No. 11/November 2010, une transformation spatiale unitaire peut effectivement être décomposée en une succession de transformations primaires, chaque transformation primaire affectant le profil de phase transverse du rayonnement lumineux.

Le document "Design of High Order Mode-Multiplexers using Multiplane Light Conversion" de N. Fontaine et AI, présenté à la 43eme conférence sur les communications optiques, (ECOC, 2017) rappelle que la conception d'un dispositif MPLC consiste à déterminer les caractéristiques dans un plan (x,y) d'un ensemble de masques de phase, chaque masque i introduisant un déphasage de $\varphi_i(x,y)$. Il rappelle également dans le détail une méthode de conception de ces masques qui se fonde sur un algorithme d'optimisation par mise en correspondance de fronts d'ondes. Il évoque la possibilité, en alternative, de fonder la conception sur une méthode d'optimisation stochastique de solutions générées par calcul.

Ce document propose aussi une méthode de conception d'un multiplexeur optique spatial permettant de limiter le nombre de masques de phase nécessaires pour mettre en œuvre la transformation s'opérant sur le rayonnement lumineux incident. Plus spécifiquement, ce document divulgue un dispositif MPLC qui convertit une entrée composée d'un faisceau linéaire de 45 fibres émettant un rayonnement lumineux gaussien, dans les 9 premiers groupes de modes d'une fibre optique multimode à gradient d'indice. La conversion est réalisée à l'aide de 14 masques de phase. Les modes de sorties du dispositif doivent être représentés dans une base de modes d'Hermite-Gauss et, simultanément, les faisceaux lumineux d'entrée être réarrangés dans le plan transverse pour les disposer selon une forme de triangle.

Ce document ne donne aucune explication permettant de comprendre en quoi la combinaison choisie (et notamment le choix de la base de sortie et le réarrangement en triangle des faisceaux lumineux d'entrée) permet de réaliser la conversion en 14 masques de phase, si ce n'est d'affirmer que la symétrie des modes et de l'arrangement en triangle pourrait en être la cause.

On connaît également les documents « Pauline Boucher, Nicolas Barré, Olivier Pinel, Guillaume Labroille, and Nicolas Treps, "Continuous axial scanning of a Gaussian beam via beam steering," Opt. Express 25, 23060-23069 (2017) », « R. Saad et al., "Highly Sélective 7 Orbital Angular Momentum Mode Multiplexer Based on Multi-Plane Light Conversion," 2017 European Conférence on Optical Communication (ECOC), Gothenburg, 2017, pp. 1-3, doi: 10.1109/ECOC.2017.8345890. », et "FONTAINE NICOLAS K ET AL: "Design of High Order Mode-Multiplexers using Multiplane Light Conversion", 2017 EUROPEAN CONFERENCE ON OPTICAL COMMUNICATION (ECOC), IEEE, 17 septembre 2017 (2017-09-17), pages 1-3, XP033336455, DOI: 10.1109/ECOC.2017.8346129 » qui divulguent chacun un procédé de conception d'un MPLC.

La présente invention vise à établir une méthode de conception d'un dispositif optique MPLC qui ne soit pas limitée à l'exemple très particulier présenté dans ce document. Elle vise notamment à fournir une méthode de conception permettant de mettre en oeuvre une transformation à l'aide d'un nombre relativement réduit de masques de phase, tout en donnant une grande liberté de choix dans la nature des bases de modes et dans l'arrangement des faisceaux.

**BREVE DESCRIPTION DE L'INVENTION**

En vue de la réalisation de ce but, l'objet de l'invention propose un procédé de conception d'un dispositif de conversion multiplan d'un rayonnement lumineux, le dispositif mettant en oeuvre une pluralité de masques de phase interceptant le rayonnement lumineux pour respectivement lui appliquer un déphasage spatio-fréquentiel conduisant à une transformation déterminée, le procédé de conception comprenant les étapes suivantes :

- Définir une première famille de modes, chaque mode de la première famille étant désigné par un couple d'indice {i,j} 1<=i<=n, 1<=j<=m, la première famille étant à variables spatiales séparables ;
- Définir une deuxième famille de modes, chaque mode de la deuxième famille étant désigné par un couple d'indice {i,j}, 1<=i<=n, 1<=j<=m, la deuxième famille étant à variables spatiales séparables ;

- Former une première et, respectivement, une deuxième famille de modes exploités en sélectionnant N modes de couple d'indice {i, j}$_k$ 1<=k<=N, N étant inférieur ou égal à n.m et strictement supérieur à n et à m, dans la première famille et, respectivement, dans la deuxième famille, les N modes de la deuxième famille n'étant pas des modes d'Hermite-Gauss et, simultanément, les N modes de la première famille n'étant pas arrangés dans un plan en forme de triangle ;
- Etablir le déphasage spatio-fréquentiel des masques de phase permettant de transformer chaque mode de couple d'indices {i,j}$_k$ de la première famille de modes exploités dans le mode de même couple d'indices {i,j}$_k$ de la deuxième famille de modes exploités.

En imposant de la sorte que la première et la deuxième famille de modes exploités présentent la caractéristique de séparabilité des variables spatiales, et que chaque mode de couple d'indices {i,j}$_k$ de la première famille de modes exploités soit transformé par les masques de phases dans le mode de même couple d'indices {i,j}$_k$ de la deuxième famille de modes exploités, on peut établir une transformation déterminée par l'intermédiaire d'un nombre de masques de phase réduit par rapport à une méthode de conception n'imposant pas ces contraintes.

Selon d'autres caractéristiques avantageuses et non limitatives de l'invention, prises seules ou selon toute combinaison techniquement réalisable :

- la première famille de modes et la deuxième famille de modes sont des bases ;
- les bases de la première famille de modes et de la deuxième famille de modes sont orthonormées ;
- l'établissement du déphasage spatio-fréquentiel des M masques de phase est réalisé en optimisant un degré de correspondance entre la transformation des modes de la première famille de modes exploités et les modes de la deuxième famille de modes exploités ;
- le degré de correspondance est optimisé par une méthode d'optimisation stochastique ;
- le degré de correspondance est optimisé par mise en correspondance de fronts d'ondes ;
- l'étape visant à établir le déphasage spatio-fréquentiel des masques de phase comprend :

  i. Etablir respectivement un déphasage unidimensionnel selon une première variable spatiale et selon une seconde variable spatiale ;
  ii. Combiner les déphasages unidimensionnels selon la première variable spatiale et selon la seconde variable spatiale pour établir le déphasage spatio-fréquentiel des masques de phase ;

- la pluralité de masques de phase comprend des masques de phases complémentaires permettant de réarranger spatialement les modes de la première famille de modes exploités ou de la deuxième famille de modes exploités.

L'invention porte également sur un programme d'ordinateur comprenant des instructions adaptées à la mise en oeuvre d'au moins une des étapes du procédé de conception, lorsque le programme est exécuté sur un ordinateur.
Selon un autre aspect l'invention propose un dispositif de conversion multiplan d'un premier rayonnement lumineux, le dispositif comportant un bloc de conversion comprenant une pluralité de pièces optiques et mettant en oeuvre une pluralité de masques de phase portés par au moins une des pièces optiques, les masques de phase appliquant un déphasage spatio-fréquentiel visant à élaborer un deuxième rayonnement, la transformation déterminée, dite à variables séparables, mettant respectivement en relation N modes d'indices {i, j}$_k$ , 1<=k<=N, d'une première famille de modes exploités à variables spatiales séparables décrivant le premier rayonnement lumineux au niveau d'un premier plan transverse avec N modes de même indice {i, j}$_k$ , 1<=k<=N, d'une deuxième famille de modes exploités à variables spatiales séparables décrivant le deuxième rayonnement lumineux au niveau d'un deuxième plan transverse, les N modes de la deuxième famille n'étant pas des modes d'Hermite-Gauss et, simultanément, les N modes de la première famille n'étant pas arrangés dans le premier plan transverse en forme de triangle
Selon d'autres caractéristiques avantageuses et non limitatives de l'invention, prises seules ou selon toute combinaison techniquement réalisable :

- Le dispositif de conversion multiplan comprend au moins un étage pour injecter le premier et/ou le deuxième rayonnement dans le bloc de conversion et/ou extraire le premier et/ou le deuxième rayonnement du bloc de conversion ;

- l'étage comprend un faisceau de fibres optiques arrangées dans un plan transverse d'étage, le premier plan transverse étant le plan transverse d'étage ;

- le faisceau de fibres optiques de l'étage est arrangé dans le plan transverse d'étage en forme de rectangle ou de carré ;

- l'étage comprend au moins une fibre multimode ;

- au moins une des pièces optiques porte au moins un masque de phase à variables spatiales séparables ;

- les pièces optiques comprennent deux pièces optiques réfléchissantes disposées en vis-à-vis l'une de l'autre, les masques de phases étant portés par l'une et/ou l'autres des deux pièces optiques réfléchissantes ;

- les deux pièces optiques sont constituées d'une lame de phase microstructurée et d'un miroir, et les masques de phases sont portés par la lame de phase microstructurée ;

- Le dispositif de conversion multiplan met en oeuvre une pluralité de transformations à variables séparables.

**BREVE DESCRIPTION DES DESSINS**

D'autres caractéristiques et avantages de l'invention ressortiront de la description détaillée de l'invention qui va suivre en référence aux figures annexées sur lesquels :

- La figure 1 représente à titre d'illustration une famille de modes à variables séparables ;

- La figure 2 représente une seconde illustration d'une famille de modes à variables séparables ;

- La figure 3 représente les étapes d'un procédé conforme à l'invention ;

- La figure 4 représente un premier exemple d'un dispositif de conversion multiplan conforme à l'invention ;

- Les figures 5a et 5b représentent un autre exemple d'un dispositif de conversion multiplan conforme à l'invention.

- La figure 6 illustre un exemple de décomposition modale d'un rayonnement incident ;

- La figure 7 représente un dispositif de filtrage modal ;

- La figure 8 représente un deuxième exemple d'application d'un procédé de conception conforme à la présente invention ;

- La figure 9 représente la décomposition modale d'un rayonnement incident du deuxième exemple d'application ;

- La figure 10 représente la décomposition modale d'un rayonnement transformé du deuxième exemple d'application.

**DESCRIPTION DETAILLEE DE L'INVENTION**

On définit dans la présente demande un rayonnement lumineux comme une famille composée d'au moins un mode du champ électromagnétique, chaque mode formant une distribution spatio-fréquentielle d'amplitude, de phase, de polarisation. En conséquence, la modification ou la transformation du rayonnement lumineux désigne la modification ou la transformation spatio-fréquentielle d'au moins un des modes du rayonnement.

On considérera dans la présente description que le rayonnement est polarisé selon une unique direction et présente une unique fréquence. Toutefois les principes exposés sont tout à fait applicables à un rayonnement présentant plus d'une direction de polarisation ou plus d'une unique fréquence. Ainsi, le déphasage spatial appliqué à un rayonnement par un masque de phase dans le cadre de la description pourra s'exprimer plus généralement comme un déphasage spatio-fréquentiel, c'est à dire modifiant le déphasage selon les variables d'espace dans un plan transverse et selon la fréquence optique.

Par souci d'exhaustivité, on rappelle les principes de fonctionnement d'un dispositif de conversion de lumière multi plan, plus communément désigné par les termes anglo-saxons « Multi-Plane Light Converter » (MPLC). Dans un tel dispositif, un rayonnement lumineux incident subit une succession de réflexions et/ou de transmissions, chaque réflexion et/ou transmission étant suivie par une propagation du rayonnement en espace libre. Certaines au moins des pièces optiques sur lesquelles s'opèrent les réflexions et/ou les transmissions, et qui guident la propagation du rayonnement incident, présentent une surface microstructurée qui modifie le rayonnement lumineux incident.

Par « surface microstructurée » on signifie que la surface de la pièce optique peut présenter des « pixels » dont les dimensions sont par exemple comprises entre quelques microns à quelques centaines de microns, ou plus.

Chaque pixel présente une élévation, par rapport à un plan moyen définissant la surface en question, par exemple d'au maximum quelques microns ou d'au maximum quelques centaines de microns, ou plus. Une pièce optique présentant une telle surface microstructurée forme un masque de phase introduisant un déphasage local au sein de la section transverse du rayonnement qui s'y réfléchit ou s'y transmet.

Ainsi, un rayonnement lumineux qui se propage au sein du composant subit une succession de déphasages locaux séparés par des propagations. Le rayonnement lumineux subit ainsi une transformation complexe. En d'autres termes, la succession des transformations élémentaires (par exemple une dizaine de transformations successives ou même moins) établit une transformation globale du profil spatial du rayonnement. Il est ainsi possible de configurer les surfaces microstructurées pour transformer un premier rayonnement lumineux, qui présente notamment une forme spécifique, en un deuxième rayonnement dont la forme est différente.

On considérera dans la présente description que la forme d'un rayonnement lumineux correspond à la distribution spatio-fréquentielle de l'amplitude et de la phase transverse d'un mode ou de la famille des modes composant le rayonnement lumineux. On rappelle à ce propos qu'un mode en tout point de l'espace (x, y, z) peut s'exprimer en fonction du mode en un seul plan, ici z=0, selon l'équation de Fresnel

$$E(x, y, z) = \frac{e^{ikz}}{i\lambda z} \iint_{-\infty}^{\infty} E(x', y', 0) e^{\frac{ik}{2z}\left[(x-x')^2 + (y-y')^2\right]} dx' dy'$$

dans l'approximation de Fresnel : En d'autres termes, la description de la forme (i.e. la distribution spatio-fréquentielle de l'amplitude et de la phase de ses modes) dans un plan (x, y, z0) d'un rayonnement lumineux est suffisant pour décrire entièrement ce rayonnement.

Ces définitions étant ainsi posées, la conception d'un dispositif MPLC visant à transformer un premier rayonnement lumineux dans un deuxième rayonnement lumineux revient à établir une configuration de masques de phase du dispositif telle que chaque mode $u_i(x,y)$ formant le premier rayonnement lumineux soit transformé au plus juste dans un mode $v_j(x,y)$ du second rayonnement lumineux. Cette transformation peut être théoriquement parfaite lorsqu'un nombre suffisant de masques de phase est fourni et lorsque les première et deuxième familles de modes $u_i$ et $v_j$ forment des bases orthonormées.

Si les familles de modes ne forment pas des bases orthonormées, on peut parfois également trouver une transformation parfaite, ou chercher à approximer au mieux cette transformation. En effet, un dispositif de conversion MPLC n'est pas limité à la transformation de bases de modes orthonormées. D'une manière générale, que les variables spatiales soient séparables ou non, on peut également concevoir un tel dispositif à partir de familles de modes qui ne sont pas nécessairement orthogonales.

La démonstration mathématique et physique de l'existence d'une configuration de masques de phase pour toute transformation unitaire a été exposée dans l'article de Jean-François Morizur cité en introduction de cette demande. La faisabilité d'un tel composant a été démontrée, ainsi que son caractère universel, à savoir la faculté de réaliser n'importe quelle transformation unitaire de la forme d'un rayonnement lumineux incident.

Une réalisation pratique d'un tel composant a par exemple été proposée dans l'article de Guillaume Labroille et autres, "Efficient and mode-sélective spatial mode multiplexer based on multi-plane light conversion", dans Optics Express 30 juin 2014 vol 22 N°13 p 15599 qui explique la constitution de ce composant. Plus spécifiquement, ce composant utilise deux miroirs disposés en vis-à-vis l'un de l'autre, l'un au moins de ces miroirs portant une pluralité de zones microstructurée formant les masques de phase. Cette architecture forme une cavité multi passages dans laquelle se propage un rayonnement qui se réfléchit plusieurs fois, notamment au niveau des différentes zones microstructurées, sur les deux miroirs.

La conception des masques de phase (i.e. les zones microstructurées) d'un dispositif MPLC se fait en pratique par simulation dans un ordinateur capable de modéliser le comportement du rayonnement lumineux au cours de sa propagation guidée par les différentes pièces optiques, et notamment celles portant les zones microstructurées formant les masques de phase. L'ordinateur simule la propagation, dans cette succession d'éléments optiques, d'un rayonnement lumineux incident ayant une forme d'entrée et il calcule le rayonnement transformé qui en résulte. Cette simulation peut s'appuyer notamment sur l'équation de propagation de Fresnel qui vient d'être présentée.

D'une manière générale, pour concevoir le dispositif MPLC, on fixe un nombre de masques de phase et on cherche à déterminer chaque masque de phase conduisant à faire coïncider le rayonnement transformé composé des modes $u_i^t$, c'est-à-dire les modes $u_i$ du rayonnement incident (le premier rayonnement lumineux) transformés par le dispositif, avec un rayonnement désiré. Ce rayonnement désiré (le deuxième rayonnement lumineux) est composé de l'ensemble des modes de la deuxième famille $v_j$, désignée parfois de famille de sortie.

Le degré de correspondance entre ces deux rayonnements $\alpha$ peut s'exprimer, par exemple, comme une valeur

numérique $\alpha = \sum_i \left| \iint u_i^t(x,y) v_j^*(x,y) dx dy \right|^2$ que l'on cherche donc à maximiser au cours du procédé de conception.

Cette recherche peut se poser comme un problème d'optimisation visant à déterminer pour chaque masque de phase $\varphi_l$, le déphasage $\varphi_l(x_k, y_k)$ de chaque pixel disposé en un point $(x_k, y_k)$ de la zone microstructurée formant le masque. A titre d'exemple, lorsque le dispositif optique comprend plus de 10 masques de phase et la résolution en pixel de ces masques est important, cette étape d'optimisation cherche à déterminer un nombre très important de paramètres, qui peut excéder un million.

Le document WO 2012/085046 présenté en introduction à cette demande propose des méthodes de conception visant à simplifier ce problème d'optimisation particulièrement complexe par mise en correspondance de fronts d'ondes au niveau de chaque masque de phase. Ces méthodes, qui sont également rappelées par l'article de N. Fontaine, permettent de simplifier le problème d'optimisation et convergent asymptotiquement vers une solution. Pour améliorer la qualité de la transformation obtenue, une approche typique consiste à augmenter le nombre de masques de phase utilisés et de répéter les étapes de conception. Toutefois, un nombre élevé de masques de phase rend particulièrement complexe la fabrication du dispositif MPLC.

La présente invention prend une tout autre approche. Elle impose des caractéristiques aux première et deuxième famille de modes $u_i$, $v_j$ que la transformation associe. Ces contraintes conduisent à poser un nouveau problème d'optimisation dont des solutions forment une classe de transformations particulièrement simple à mettre en oeuvre, i.e ne nécessitant qu'un faible nombre de masques de phase et qui sont simples à fabriquer.

Plus spécifiquement, l'invention repose sur le choix des première et deuxième familles de modes permettant respectivement la décomposition du rayonnement incident et du rayonnement désiré pour que ces familles soient à variables spatiales séparables.

On rappelle qu'un champ à variables séparables est un champ dont le dont le profil transverse en un plan z=0 s'écrit sous la forme $E(x, y, 0) = f_0(x).g_0(y)$, où $f_0$ et $g_0$ sont dénommées « fonctions génératrices ». On peut montrer que lorsque ce rayonnement se propage sous l'approximation de Fresnel, il reste séparable en tout plan z. En effet, l'intégrale de Fresnel peut se factoriser sous la forme :

$$E(x,y,z) = \frac{e^{ikz}}{i\lambda z} \iint_{-\infty}^{\infty} E(x',y',0) e^{\frac{ik}{2z}\left[(x-x')^2 + (y-y')^2\right]} dx' dy'$$

$$E(x,y,z) = \frac{e^{ikz}}{i\lambda z} \left( \int f(x') e^{\frac{ik}{2z}(x-x')^2} dx' \right) \left( \int g(y') e^{\frac{ik}{2z}(y-y')^2} dy' \right)$$

en d'autres termes $E(x, y, z) = f_z(x).g_z(y)$, ce qui prouve bien son caractère « à variables spatiales séparables » en tout plan z. On note que les fonctions $f_z(x)$ et $g_z(y)$ sont respectivement et uniquement dépendantes de $f_0(x)$ et $g_0(y)$. En d'autres termes, en tout plan z, $f_z(x)$ est uniquement déterminée par $f_0(x)$. Il en est de même pour $g_z(y)$.

L'influence d'une phase spatiale $\varphi(x,y)$, par exemple lors d'une réflexion ou d'une transmission sur un masque de phase, se fait sur le produit du champ par un terme exponentiel $e^{i\varphi(x,y)}$. Le déphasage introduit par un masque de phase « à variables spatiales séparables » se définit naturellement comme une somme de phase $\varphi(x,y)=\psi(x)+\theta(y)$

Ainsi un rayonnement $E(x,y)$ à variables séparables subissant le déphasage $\varphi(x,y)$ s' exprime comme :

$$E(x,y) e^{i\varphi(x,y)} = \left( f(x) e^{i\psi(x)} \right) \left( g(y) e^{i\theta(y)} \right)$$

et reste lui également à variables spatiales séparables. La phase selon x n'a d'influence que sur la composante selon x de ce rayonnement, et il en va de même pour la phase selon y. En d'autres termes, sous l'effet de masques de phase à variables séparables, les deux composantes selon x ou y du rayonnement restent indépendantes l'une de l'autre et « à variables séparables ». Un mode à variables spatiales séparables reste donc séparable après sa propagation en espace libre et sous l'influence d'un masque de phase à variables spatiales séparables.

Dans le cadre de la présente demande, on définit donc dans un plan muni d'un système de coordonnées cartésiennes (x,y) une famille de modes à variables spatiales séparables (et plus concisément « à variables séparables »), une famille u composée des modes $u_{ij}$ d'indices {i,j}, 1<=i<=n et 1<=j<=m, telle que pour tout i et pour tout j on peut exprimer :

$$u_{ij}(x,\ y)=f_i(x).g_j(y)$$

On précise que cette caractéristique de séparabilité des variables spatiales porte bien sur la famille de modes dans son ensemble et qu'il n'est pas suffisant que l'on puisse séparer les variables spatiales de chacun des modes d'une famille pour cette caractéristique soit effectivement présente pour la famille en question.

Bien entendu, il n'est pas toujours possible, dans la réalité des choses, de toujours vérifier très précisément les égalités définissant un champ ou un masque à variables séparables. Et on pourra donc tolérer des écarts dans le respect de ces égalités, et toutefois considérer que l'on a bien à faire à une famille ou à un masque de phase à variables spatiales séparables.

L'invention met à profit ces observations pour fournir une méthode de conception d'un dispositif de conversion multiplan d'un rayonnement lumineux. Elle propose notamment de définir une première et une deuxième famille de modes, toutes deux à variables séparables, et d'établir les masques de phases permettant de transformer chaque mode de la première famille en un mode correspondant de la deuxième famille (c'est à dire de même indice {i, j}).

On note que ce principe est très éloigné des hypothèses de symétrie des modes et d'arrangement en triangle présentées par le document de N. Fontaine de l'état de la technique. Ces hypothèses sont en effet fondées sur des résultats d'un procédé de conception très particulier dans lequel, simultanément, les modes de sortie sont choisis pour être des modes d'Hermite-Gauss et les modes d'entrée réarrangés dans le plan transverse pour les disposer selon une forme de triangle. Ce document, en l'absence d'explications détaillées justifiant les performances du MPLC conçu, ne peut donc fournir d'enseignement permettant de généraliser cette expérience au-delà de la configuration qui a été choisie.

Il ne s'agit aussi en aucun cas de positionner les modes de la première famille dans un arrangement du plan qui reprend la disposition des lobes d'intensité maximum des modes de la deuxième famille, comme cela a également pu être avancé. Et de plus, il n'est pas nécessaire que les modes formant les familles présentent un quelconque axe de symétrie pour qu'une famille soit à variables séparables.

Un procédé de conception conforme à l'invention fonctionne notamment avec toute deuxième famille de modes à variables séparables qui ne serait pas d'Hermite-Gauss. Il fonctionne également avec toute disposition des modes d'entrée qui ne serait pas triangulaire.

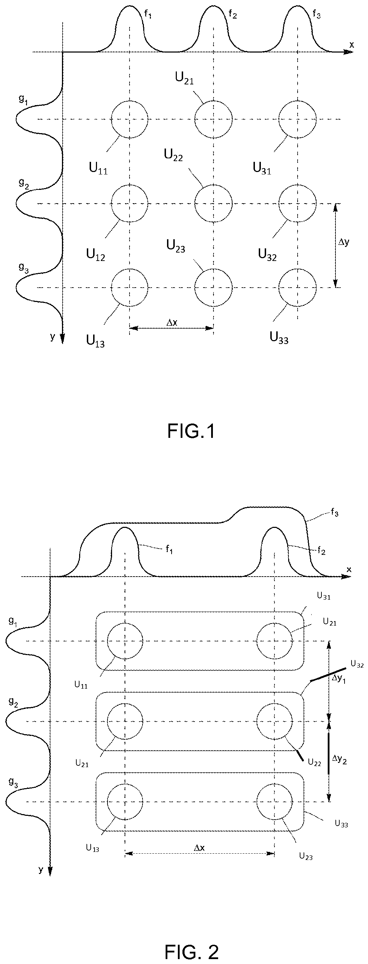

Pour illustrer les différences fondamentales entre le principe de la présente invention et un simple effet de symétrie proposé par le document de N. Fontaine, on a représenté sur les figures 1 et 2 plusieurs exemples de famille de modes à variables séparables. Pour simplifier ces figures, on a représenté un nombre limité de modes, mais bien entendu l'invention trouve tout son intérêt lorsque le nombre de modes traités par le dispositif MPLC est important, supérieur à 10, 20, voire même 50 ou 100 modes.

Ainsi, sur la figure 1 on a représenté une famille de mode $u_{ij}(x,y)$ dans un plan muni d'un système de coordonnées cartésiennes (x,y). Cette famille de modes est à variables séparables car tous les modes $u_{ij}(x,y)$ peuvent s'exprimer comme le produit $u_{ij}(x,\ y)=f_i(x).g_j(y)$ pour tout couple (x, y) du plan. Les fonctions génératrices s'expriment ici sous la forme de gaussiennes centrées sur les points du plan (i.$\Delta$x, j.$\Delta$y) où les pas $\Delta$x et $\Delta$y sont choisis constants. On pourrait envisager une autre disposition ne fixant pas les pas $\Delta$x, $\Delta$y constants tout en gardant le caractère séparable de la famille.

La figure 2 représente, également à titre d'illustration, un second exemple de famille de modes à variables séparables. Sur cette figure 2, on observe que les mode $u_{ij}$ ne sont pas disposés uniformément sur une grille régulière du plan (x, y). Les fonctions génératrices $g_1$, $g_2$, $g_3$ sont centrées sur des points respectivement séparés d'un pas $\Delta$y1, $\Delta$y2 distincts l'un de l'autre. On peut également noter que les fonctions génératrices $f_1$, $f_2$, $f_3$ sont de natures bien différentes. Il n'est pas nécessaire que les fonctions génératrices présentent une symétrie quelconque.

Dans la pratique, pour concevoir un dispositif MPLC, on pourra choisir toute famille de modes à variables séparables qui convient. Certaines familles sont toutefois particulièrement utiles. Il s'agit notamment :

- de la famille composée de modes dont les fonctions génératrices ($f_i$, $g_i$) sont des gaussiennes, comme cela a été représenté sur la figure 1 et tel qu'obtenu en sortie d'un faisceau de fibres optiques ;
- de la famille des modes de Hermite-Gauss qui forment une base de modes d'une fibre optique à gradient d'indice parabolique ;
- de la famille des modes de Hermite-Gauss elliptiques.

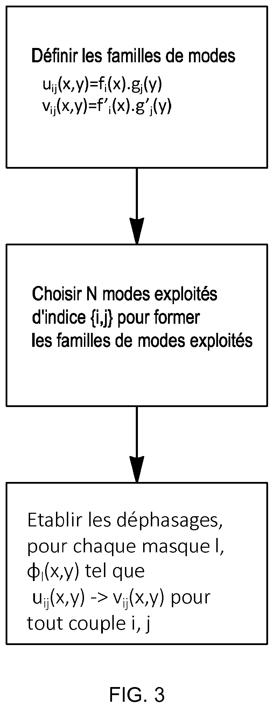

Ces principes généraux étant posés, l'invention propose donc un procédé de conception d'un dispositif de conversion multiplan MPLC, mettant en oeuvre une pluralité de M masques de phase pour appliquer une transformation déterminée. Le procédé est schématiquement représenté par les étapes de la figure 3.

Le procédé de conception vise donc à déterminer numériquement les M masques de phase permettant de réaliser cette transformation. Comme on l'a vu, ces masques sont définis par une pluralité de pixels k disposés aux emplacements $(x_k, y_k)$ d'un plan. Toutefois, par souci de simplification de l'exposé qui va suivre, on exprimera le déphasage imposé dans le plan par le masque l ($1<=1<=M$) comme une fonction $\varphi_l(x,y)$, en masquant son caractère discret.

Une étape d'une méthode conforme à l'invention vise à définir une première famille de modes u, chaque mode $(u_{ij})$ de la première famille étant désigné par un couple d'indice $\{i,j\}$ $1<=i<=n$, $1<=j<=m$. Cette première famille est à variables séparables de sorte que l'on peut exprimer $u_{ij}(x,y)=f_i(x).g_j(y)$. On définit de la sorte une nombre n de fonctions génératrices $f_i$ et un nombre m de fonctions génératrice $g_j$.

Une autre étape d'une méthode conforme à l'invention vise à définir une deuxième famille de modes v, chaque mode de la deuxième famille $(v_{ij})$ étant désigné par un couple d'indices $\{i,j\}$, $1<=i<=n$, $1<=j<=m$. La deuxième famille est également à variables séparables de sorte que l'on peut exprimer $v_{ij}(x,y)=f'_i(x).g'_j(y)$. On définit de la sorte un nombre n de fonctions génératrices $f'_i$ et un nombre m de fonctions génératrice $g'_j$.

On note que les indices ij désignant chacun des modes de la première et de la seconde famille de modes ne sont pas affectés arbitrairement à ces modes, mais découlent directement des indices i et j des fonctions génératrices qui les engendrent.

Ces premières étapes de la méthode de conception permettent donc de définir les familles de modes à variables séparables qui seront transformées l'une vers l'autre par le dispositif MPLC. Ces deux familles ont la même cardinalité n.m. Toutefois, il n'est pas nécessaire que tous les modes $\{i,j\}$, $1<=i<=n$, $1<=j<=m$ composant ces familles soient effectivement exploités par le dispositif.

Ainsi, dans l'exemple illustratif de la figure 1, parmi les neuf modes de la famille représentée, on peut choisir de n'exploiter dans le dispositif MPLC qu'une partie d'entre eux. On pourrait par exemple choisir de ne pas exploiter les modes $u_{11}$ et $u_{33}$. Dans ce cas, il faut également éliminer des modes de la deuxième famille pour préserver la même cardinalité des familles. Pour préserver également la propriété de séparabilité des variables au cours de la propagation, des réflexion et/ou transmission du rayonnement, il est important que chaque mode de la première famille d'indice $\{i, j\}$ soit transformé dans le mode de la deuxième famille du même indice $\{i, j\}$. Cela conduit donc à éliminer les modes $v_{11}$ et $v_{33}$ de la deuxième famille de modes dans l'exemple pris en illustration.

Plus généralement, une méthode de conception conforme à l'invention comprend une étape visant à choisir un nombre N, inférieur ou égal à n.m et strictement supérieur à n et à m, de couples d'indices $\{i, j\}_k$, $1<=k<=N$ et former une première et, respectivement, une deuxième famille de modes exploités en sélectionnant les modes de couple d'indice $\{i, j\}_k$ $1<=k<=N$ dans la première famille et, respectivement, dans la deuxième famille.

On note que le caractère de séparabilité des variables spatiales est préservé dans la première et la deuxième famille de modes exploités.

Pour exploiter tout le potentiel du procédé de conception, on choisit ce nombre N de modes exploités pour qu'il soit strictement supérieur à n et à m. C'est-à-dire que le nombre de modes exploités ne consiste pas à simplement choisir une ligne, une colonne ou une diagonale de la famille de modes, lorsque ceux-ci sont par exemple disposés comme représenté sur la figure 1.

Comme on l'a vu, les familles de modes peuvent former avantageusement une base orthonormée, mais cette caractéristique ne constitue pas une limitation nécessaire de l'invention.

Selon l'invention, la transformation recherchée associe chaque mode de couple d'indice $\{i,j\}_k$ de la première famille de modes exploité dans le mode de même couple d'indice $\{i,j\}_k$ de la deuxième famille de modes exploité. Ainsi, chaque mode de couple d'indice $\{i, j\}_k$ de la première famille de modes exploités est mis en correspondance après qu'il a été propagé dans le dispositif MPLC avec le mode de même couple d'indice $\{i, j\}_k$ de la deuxième famille de modes exploités. On préserve ainsi le caractère « séparable » des grandeurs $\varphi_l(x,y)$ définissant les masques de phases.

Lorsque les N modes de la deuxième famille de modes exploités sont tous des modes Hermite-Gauss et que, simultanément, les modes $\{i, j\}_k$ choisis de la première famille sont disposés dans un plan en forme de triangle, on retrouve de manière fortuite la solution proposée dans l'article de N. Fontaine de l'état de la technique.

Une fois ces contraintes portant sur les familles de modes imposées et sur leurs associations, on peut déployer dans une étape suivante d'un procédé conforme à l'invention, une étape d'optimisation visant à établir les grandeurs de déphasage $\varphi_l(x,y)$, $1<=l<=M$, des M masques de phase permettant de transformer au plus juste la première famille de modes exploités en la deuxième famille de modes exploités.

Cette étape d'optimisation, en tant que telle, n'est pas nécessairement différente de celles de l'état de la technique. Elle vise donc à établir les grandeurs de déphasage $\varphi_l(x,y)$, $1<=1<=M$, des M masques de phase maximisant un degré de correspondance $\alpha$ entre la transformation des modes de la première famille de modes exploités et les modes de la deuxième famille de modes exploités.

Et l'invention n'est pas limitée à une méthode d'optimisation particulière. Il peut ainsi s'agir d'une méthode d'optimisation stochastique ou par rapprochement de fronts d'ondes tels que décrit dans les documents de l'état de la technique.

À l'issue de cette étape d'optimisation, on dispose donc d'un modèle numérique $\varphi_l(x,y)$ de chacun des M masques de phase, permettant d'appliquer à un rayonnement incident une transformation déterminée. Plus précisément, ce modèle est constitué des valeurs de phase $\varphi_l(x_k,y_k)$ en tout pixel $(x_k,y_k)$ du plan de chacun des M masques de phase. Ces déphasages peuvent être transformés aisément en une élévation de chaque pixel, ce qui permettra de fabriquer les masques de phase. Lorsque cette optimisation est bien menée, chacun des M masques de phase présente la propriété d'être à variables séparables ou est proche de présenter cette propriété.

Il n'est pas nécessaire que la première et deuxième famille de modes exploités forment les familles d'entrée et de sortie du dispositif MPLC. D'une manière générale, on peut exprimer que la transformation déterminée met respectivement en relation les N modes de la première famille de modes exploités décrivant le premier rayonnement lumineux au niveau d'un premier plan transverse dans le dispositif, avec les N modes de même indice de la deuxième famille de modes exploités décrivant le rayonnement lumineux désiré au niveau d'un deuxième plan transverse du dispositif. Les M masques de phases permettent de réaliser la transformation entre ce premier et ce deuxième plan transverse.

On peut prévoir quelques masques de phases complémentaires disposés en amont et/ou en aval des M masques de phase nécessaires à la transformation des entrées vers la première famille de modes au niveau du premier plan transverse ou de la seconde famille de modes au niveau du deuxième plan transverse vers les sorties. D'une manière plus générale, ces masques de phase complémentaires permettent de réarranger spatialement les modes de la première famille de modes exploités ou de la deuxième famille de modes exploités.

Selon une première approche, ces masques complémentaires sont directement ajoutés au modèle numérique du dispositif MPLC au cours du procédé de conception qui vient d'être décrit. On cherche alors à déterminer, au cours de ce procédé, les caractéristiques de l'ensemble des masques de phase, y compris les masques complémentaires. Au cours de l'étape d'optimisation on peut chercher à imposer que les familles de modes exploités au niveau du premier plan transverse et au niveau du deuxième plan transverse soient bien conformes, respectivement, à la première et à la deuxième famille, et donc à variables séparables.

Selon une autre approche, les masques complémentaires sont déterminés au cours d'une seconde itération de l'étape d'optimisation dans laquelle ils sont ajoutés au modèle numérique du dispositif MPLC muni des M masques de phase établis à l'issue de la première itération.

A ce propos, on note qu'un procédé de conception conforme à l'invention peut prévoir une pluralité d'itérations de l'étape d'optimisation. Ces itérations successives peuvent chercher à ajuster les masques de phase obtenus à l'issue d'une itération précédente par la méthode de conception exposée. Il peut s'agir d'ajouter des masques de phase complémentaires, comme on vient de le voir, ou de rendre les masques plus manufacturables, par exemple en imposant des contraintes sur les variations spatiales de déphasage d'un masque. L'ajustement des masques de phases qui est opéré par ces itérations successives peut conduire à ce que ces masques (ou certains d'entre eux) ne vérifient plus, finalement, la relation de séparabilité des variables spatiales.

Toutefois, on peut dans certains cas retrouver un masque ou une pluralité de masques imposant un déphasage $\varphi_l(x,y)$ à variables séparables, c'est à dire que $\varphi_l(x,y)$ satisfait la relation $\varphi_l(x,y)=\psi_l(x)+\theta_l(y)$.

Selon une variante particulièrement avantageuse de l'invention, l'étape d'optimisation visant à élaborer les grandeurs $\varphi_l(x,y)$, $1<=l<=M$, des M masques peut tirer directement profit de leur caractère « séparable ».

En effet, en reprenant les mêmes notations pour la famille de modes $u_{ij}(x,y)=f_i(x).g_j(y)$ et la deuxième famille de modes $v_{ij}(x,y)=f'_i(x).g'_j(y)$ on peut simplifier le modèle numérique du dispositif MPLC pour se ramener à un problème d'optimisation à une dimension unique. On recherche dans ce cas les M masques de phase d'indices l, $\psi_l(x)$, tels que les fonctions génératrices $f_i(x)$ pour i = 1 à n soient respectivement transformées en les fonctions génératrices $f'_i(x)$. Simultanément, on détermine les M masques unidimensionnels de phase et d'indice l $\theta_l(y)$ tels que les fonctions génératrices $g_j(y)$ pour j = 1 à m soient respectivement transformées en les fonctions génératrices $g'_j(y)$. En d'autres termes, on établit respectivement un déphasage unidimensionnel selon une première variable spatiale, par exemple d'abscisse x, et selon une seconde variable spatiale, par exemple d'ordonnée y.

On peut ensuite combiner les déphasages unidimensionnels selon la première variable spatiale (x) et selon la seconde variable spatiale (y) pour établir le déphasage spatio-fréquentiel des masques de phase. Plus précisément, on détermine les masques de phases $\varphi_l(x,y)$ $1<=l<=M$ par l'intermédiaire de l'expression $\varphi_l(x,y)= \psi_l(x) + \theta_l(y)$. On réduit la complexité algorithmique de l'optimisation par cette approche, et grandement la puissance ou le temps de calcul nécessaire pour réaliser cette optimisation.

D'une manière générale, une méthode de conception conforme à l'invention est avantageuse en ce qu'il est possible de travailler, directement ou indirectement au cours de l'optimisation, sur les n+m relations entre les fonctions génératrices fi, fi', gi, gi' plutôt que sur les relations entre les n.m modes. La complexité est réduite de d'un degré n.m à un degré max(n,m), on comprend donc l'intérêt tout particulier de cette approche.

Quelle que soit la méthode d'optimisation choisie pour établir le modèle numérique $\varphi_l(x,y)$ des M masques de phases, celui-ci peut être exploité pour fabriquer par toute technique qui convient (par exemple par usinage, moulage et/ou photolithographie et gravure d'une pièce optique brute) et qui vise à microstructurer une ou des surfaces de réflexion-transmission d'une pièce optique, pour en faire une lame de phase. En d'autres termes, au moins un masque de phase $\varphi_l(x,y)$ obtenu à l'issue du procédé de conception conforme peut être utilisé pour fabriquer une lame de phase.

Lorsque la pièce optique, telle qu'une lame de phase, est microstructurée selon un motif découlant de la mise en oeuvre d'un procédé conforme à l'invention, la surface microstructurée n'a pas la forme d'un triangle.

Le modèle peut également être mis en oeuvre par d'autres moyens, par exemple en « programmant » le déphasage spatial imparti par un miroir déformable ou un modulateur spatial de lumière (généralement désigné par l'acronyme SLM selon la dénomination anglo-saxonne « Spatial Light Modulator »).

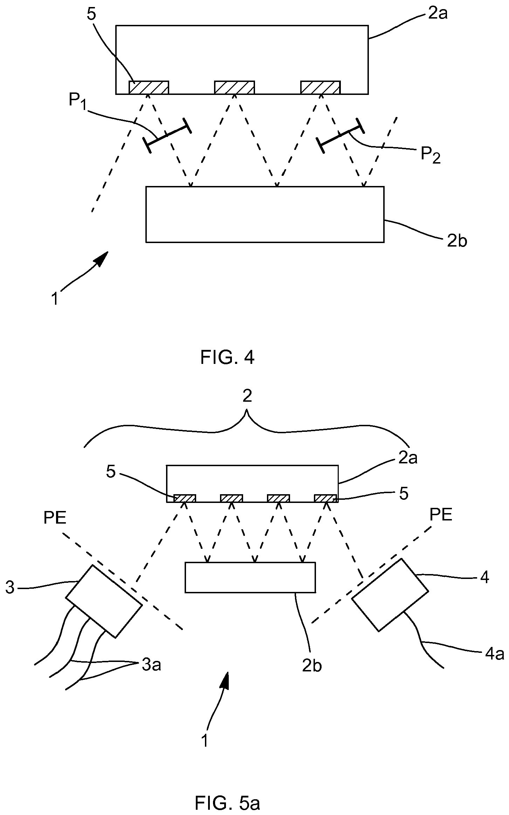

En référence à la figure 4, un dispositif MPLC 1 conçu et fabriqué à partir d'un procédé de conception conforme à l'invention comporte un bloc de conversion 2 comprenant une pluralité de pièce optiques 2a, 2b et mettant en oeuvre une pluralité de masques de phase 5 portés par au moins une des pièces optiques 2a, 2b, les masques de phase (5) appliquant un déphasage spatial $\varphi_l(x,y)$ visant à élaborer un deuxième rayonnement. Les surfaces des pièces optiques portant les masques de phase portent un repère à coordonnées cartésiennes permettant de repérer des pixels en des emplacements $(x_k, y_k)$ et les déphasages qui leurs sont respectivement associés.

Ainsi, sur l'exemple de la figure 4, on a choisi l'architecture du bloc de conversion 2 pour qu'il comprenne deux pièces optiques réfléchissantes 2a, 2b disposées en vis-à-vis l'une de l'autre, les masques de phases 5 étant portés par l'une et/ou l'autres des deux pièces optiques réfléchissantes et former une cavité multi-passage. Ici, les masques de phase 5 sont tous portés par une lame de phase 2a présentant des zones microstructurée 5 formant les masques, la seconde pièce optique 2b étant formé d'un simple miroir.

Dans ce dispositif MPLC 1, conformément à la présente description, il existe un premier plan transverse P1 au rayonnement lumineux dans lequel ce rayonnement peut être décrit par la première famille de modes à variables (x, y) séparables. Et il existe un deuxième plan transverse P2 dans lequel le rayonnement peut être décrit par une seconde famille de modes à variables (x, y) séparable. Bien entendu, la première et la seconde famille de modes ne sont pas rigoureusement identiques, c'est à dire mode à mode.

Comme on l'a vu, les déphasages $\varphi_l(x,y)$ des M masques de phase ont été établis pour que la transformation déterminée mette respectivement en relation N modes d'indices $\{i, j\}_k$, 1<=k<=N, de la première famille avec N modes de même indice $\{i, j\}_k$, 1<=k<=N de la deuxième famille. Les modes de la deuxième famille ne sont pas des modes d'Hermite-Gauss et, simultanément, les modes de la première famille ne sont pas arrangés dans le premier plan transverse en forme de triangle.

Dans un cas particulier de conception d'un tel dispositif 1, une au moins des pièces optiques du bloc de conversion 2 peut porter un masque de phase qui soit à variables séparables. Cette pièce peut correspondre à une lame de phases, à un miroir déformable ou à un modulateur spatial de lumière.

On a représenté sur la figure 5a un autre exemple d'un dispositif MPLC conforme à l'invention. On retrouve le bloc de conversion 2, comprenant la cavité multi passage tel que décrit dans l'exemple précédent. On a également prévu au moins un étage pour injecter le premier ou deuxième rayonnement dans le bloc de conversion 2 et/ou extraire le premier et/ou deuxième rayonnement du bloc de conversion 2.

Dans ce nouvel exemple, le dispositif MPLC comprend plus spécifiquement un premier étage 3 pour notamment injecter dans le bloc de conversion 2 un rayonnement lumineux incident et un deuxième étage 4 pour notamment extraire le rayonnement transformé du bloc de conversion 2.

On note toutefois que, d'une manière générale, ces étages 3, 4 pourraient avoir la fonction inverse que celle décrite ici, ou qu'un même étage 3, 4 puisse à la fois injecter et extraire du bloc de conversion 2 les rayonnements incidents et transformés. Le premier étage 3 peut comprendre une fibre optique ou un faisceau de fibres optiques 3a arrangées linéairement ou non dans un premier plan transverse d'étage. Similairement, l'étage de sortie peut comprendre une fibre optique 4a ou un faisceau de fibres optiques disposé librement dans un deuxième plan transverse d'étage. Il pourrait également y avoir moins de 2 étages ou plus de 2 étages.

Dans la configuration avantageuse de la figure 5a, le premier étage 3 est constitué d'un faisceau de fibres optiques 3a arrangées dans un premier plan transverse d'étage PE. Le premier plan transverse d'étage constitue le premier plan transverse du dispositif MPLC, c'est à dire que dans le plan transverse d'étage PE, le rayonnement incident s'exprime comme une famille de mode à variables spatiales séparables, i.e. la première famille de modes.

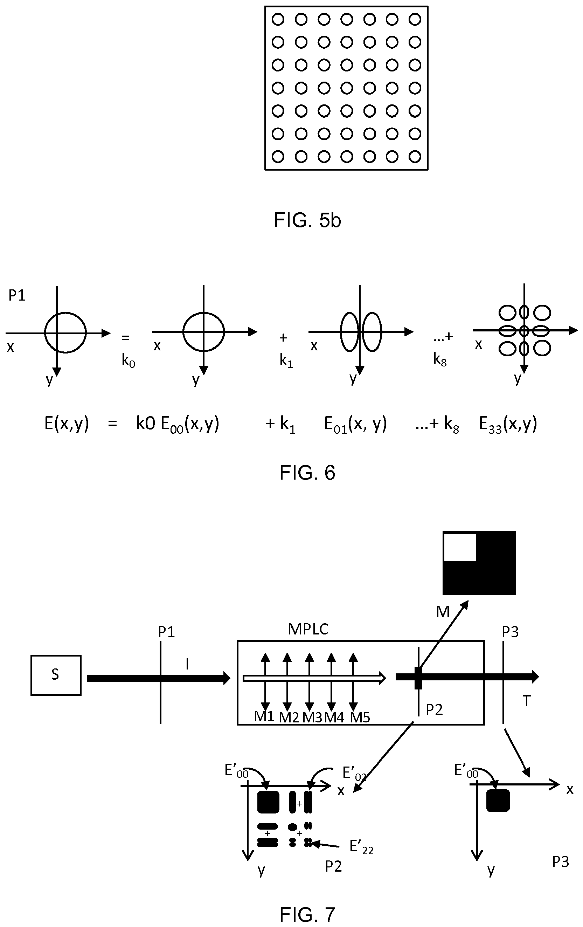

Ainsi, les fibres optiques 3a du faisceau peuvent être arrangées sous la forme d'une matrice rectangulaire ou carrée régulière tel que cela est illustré sur le plan transverse d'étage de la figure 5b de sorte que les variables spatiales de la première famille de modes puissent être séparables dans un système de coordonnées cartésiennes dans le plan PE.

Le premier étage 3 peut regrouper en faisceau 81 fibres optiques monomodes 3a disposées et assemblées sous une forme carrée composée de 9 colonnes et de 9 lignes. Les extrémités libres des fibres 3a sont munies d'une optique de collimation, comme cela est bien connu en soi, afin de mettre en forme gaussienne le rayonnement lumineux issu de chaque fibre. Le rayonnement lumineux incident qui est fourni par l'étage 3 constitue bien une famille de modes à variables séparables. Chaque mode est formé du rayonnement gaussien extrait d'une des fibres optiques du faisceau, qui peut être désigné par un couple d'indices {i, j} ou i et j désignent respectivement la ligne et la colonne de la fibre en question dans le faisceau.

Le deuxième étage 4 de l'exemple reproduit sur la figure 5a comprend une fibre multimode 4a dont les modes guidés sont des modes de Hermite-Gauss. Ces modes, on l'a vu, forment une famille de modes à variables spatiales séparables lorsqu'ils sont désignés par leurs couples d'indices {i, j} usuels. Le deuxième plan transverse d'étage défini par ce deuxième étage 4 constitue le deuxième plan transverse du dispositif MPLC 1 dans lequel le rayonnement désiré s'exprime par la deuxième famille de modes à variables spatiales séparables.

Le dispositif multiplan 1 de cet exemple vise à transformer le rayonnement issu des 81 fibres 3a du premier étage 3 pour les coupler à la fibre multimode 4a du deuxième étage 4 et forme un multiplexeur spatial. On note que ce dispositif 1 peut tout à fait être employé dans un sens inverse, et démultiplexer spatialement un rayonnement incident provenant de la fibre multimode 4a et coupler les modes de cette fibre aux fibres optiques 3a du premier étage 3.

Dans cet exemple particulier (représenté de manière simplifiée sur la figure 5a), la lame de phase 2a porte 11 masques de phases 5 conçus à l'aide d'un procédé conforme à l'invention. C'est-à-dire qu'un modèle numérique du dispositif 1 qui vient d'être présenté est exploité, par simulation, pour déterminer les caractéristiques des 11 masques de phase 5 portés par la lame de phase 2a pour ajuster au mieux la transformation de chaque mode d'indice {i, j} du premier étage 3 au mode correspondant de même indice {i, j} de la famille de modes Hermite-Gauss du deuxième étage.

Pour gagner en précision, on peut prévoir dans le bloc de transformation 2 un ou une pluralité de masques de phase 5 complémentaires permettant de former sur un premier plan transverse P1 du dispositif 1 un rayonnement qui soit aussi parfaitement que possible à variables séparables.

En alternative, on peut tolérer de l'imprécision de mise en oeuvre, c'est à dire concevoir les masques de phases 5 à partir d'une méthode de conception conforme à l'invention pour laquelle, dans le premier plan d'étage Pe, on décrira le rayonnement lumineux incident à partir de la première famille de modes à variables parfaitement séparables. On réalisera le dispositif MPLC à partir des modèles numériques des masques de phases 5 obtenus à l'issu de ce procédé de conception, et à partir d'un premier étage dans lequel la disposition des fibres optiques dans le plan d'étage est seulement approximée par une famille de modes à variables séparables.

Premier exemple d'application

Il est parfois important de parfaitement contrôler la forme d'un faisceau laser monomode (i.e. la distribution spatiale de l'amplitude et de la phase dans un plan transverse de son rayonnement). C'est notamment le cas lorsque le faisceau est employé pour usiner une pièce avec une très grande précision, et l'on peut souhaiter par exemple dans ce cas utiliser un faisceau présentant une forme du type « top hat ». Or il n'est pas toujours possible de positionner mécaniquement le faisceau dans l'espace avec cette très grande précision. Les tolérances de fabrication des éléments composant l'équipement d'usinage, les dérives et les mouvements parasites (vibrations) que peut subir l'équipement peuvent introduire des décalages dans la position occupée par la source laser, et plus généralement dans la position, la taille, l'orientation et/ou l'ellipticité du faisceau fourni par la source et donc affecter la forme du faisceau qui attaque la pièce à usiner.

On propose donc de concevoir un dispositif MPLC à l'aide d'une méthode conforme à la présente description permettant de résoudre au moins en partie ce problème. Comme cela est représenté sur la figure 7, une source d'un rayonnement lumineux S est disposée en amont du dispositif de conversion MPLC. La source S émet un rayonnement incident I, qui est transformé par le dispositif en un rayonnement transformé T. Le dispositif de conversion MPLC comprend ici 5 lames de phase M1 à M5 configurées pour que seul un mode principal du rayonnement incident soit propagé entièrement pour former le rayonnement transformé, les autres modes composant le rayonnement incident I étant absorbés par le dispositif de conversion, ou dissipés de toute manière qui convient sans contribuer à former le rayonnement transformé T.

On considère dans cet exemple que la source est censée émettre un rayonnement lumineux incident dont la forme est gaussienne, centré au point (0, 0) d'un repère cartésien d'un premier plan transverse P1 au rayonnement incident I. Comme on l'a précisé, la position, la taille, l'orientation et/ou l'ellipticité exacte du faisceau incident dans ce premier plan est susceptible d'être imparfaite ou de varier dans le temps, par rapport à sa position, sa taille, son orientation, son ellipticité attendues. A titre d'exemple, la position attendue est centrée sur le repère du plan. Quelle que soit la forme exacte de ce rayonnement à un instant déterminé, et comme cela est représenté sur la figure 6, la forme E(x, y) du faisceau dans le premier plan P1 peut se décomposer modalement, pour des variations d'amplitudes modestes, comme une combinaison de modes de Hermite-Gauss. On pourra à ce propos se référer à l'article « Quantum measurements of spatial conjugate variables: displacement and tilt of a Gaussian beam », V. Delaubert, Optics Letters, Vol. 31, Issue 10, pp. 1537-1539, (2006).

On choisit ainsi dans le cadre de cet exemple les 9 premiers modes de Hermite-Gauss, $E_{00}$ à $E_{22}$, la première famille de modes à variables séparables. Ils sont tous superposés spatialement.

On définit également une deuxième famille de modes, dans un deuxième plan transverse P2 disposé en aval de la conversion et muni lui également du même repère cartésien (x, y). Cette deuxième famille est composée d'un mode principal $E'_{00}(x, y)$ « top hat », et de huit modes de perturbation $E'_{01}(x,y)$ à $E'_{22}(x,y)$. Les 8 modes de perturbation ne recouvrent pas le mode principal dans le deuxième plan P2. Ils forment bien une famille à variables séparables, comme cela est représenté sur la figure 7.

Pour résoudre le problème posé, on configure le MPLC pour que la transformation modale du rayonnement incident, conduise à transformer chaque mode $E_{ij}(x,y)$ du premier plan dans le mode $E'_{ij}(x,y)$ du deuxième plan, c'est-à-dire transformer chaque mode de la première famille dans le mode de même indice de la deuxième famille. De la sorte, quelle que soit la position exacte du faisceau lumineux incident vis-à-vis du MPLC, la partie du rayonnement incident correspondant au premier mode gaussien $E_{00}(x,y)$ est transformée dans le mode « top hat » $E'_{00}(x,y)$. Les autres parties du rayonnement incident, se projetant dans les autres modes de la première famille, sont transformés dans les autres modes de la deuxième famille. On peut ainsi placer un masque M en sortie du dispositif MPLC, après la transformation opérée par les masques de phase, visant à bloquer la propagation de cette partie du rayonnement transformé, de manière que seule la partie correspondant au premier mode $E'_{00}(x,y)$ se propage, comme cela est bien visible sur la figure 7, dans la représentation transverse d'un troisième plan P3 en aval du masque M.

Le procédé selon l'invention permet de prévoir un nombre limité de masques de phase du dispositif MPLC pour mettre en oeuvre la transformation modale qui vient d'être décrite. On peut par exemple configurer le MPLC pour qu'il comprenne 5 masques de phases $\varphi_l(x, y)$ (i.e. 5 réflexions ou transmissions du rayonnement lumineux incident imposant un déphasage spatial du rayonnement). Et on recherche numériquement les profils de chacun des masques $\psi_l(x, y)$ conduisant à transformer précisément la première famille de modes dans le mode de même couple d'indice de la deuxième famille de modes. Comme on l'a vu, cette recherche peut se poser comme un problème d'optimisation numérique, et la séparabilité des variables de la première et deuxième famille de modes permet de faire converger efficacement ce problème vers une solution présentant un bon degré d'optimalité, même lorsque le nombre de masque est réduit, 5 dans l'exemple pris.

Deuxième exemple d'application

Il existe des situations où l'on souhaiterait transformer une base séparable en une autre base séparable sans qu'il existe a priori une correspondance d'indices $\{i, j\}_k$. C'est notamment le cas des applications de multiplexage/démultiplexage de modes, dont on trouvera une illustration dans le document de Lenglé, K., et al. "4× 10 Gbit/s bidirectional transmission over 2 km of conventional graded-index OM1 multimode fiber using mode group division multiplexing », Optics express 24.25 (2016): 28594-28605. ». Comme on l'a vu, on peut prévoir quelques masques de phases complémentaires disposés en amont et/ou en aval des M masques de phase nécessaires à la transformation « à variables séparables ».

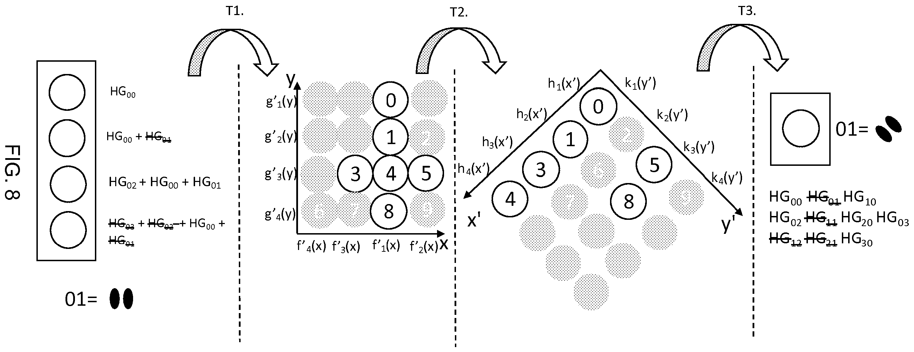

On a ainsi représenté sur la figure 8 un schéma de principe illustrant la conception d'un dispositif MPLC transformant le rayonnement lumineux incident issu d'un faisceau de 4 fibres optiques, formant un étage d'entrée du convertisseur, en un rayonnement lumineux transformé injecté dans une unique fibre multimode, formant un étage de sortie du convertisseur.

La première fibre du faisceau est une fibre monomode et propage un premier rayonnement utile lumineux gaussien $HG_{00}$, qui porte la référence 0 sur la figure 8. La deuxième fibre du faisceau est une fibre portant deux modes, un mode gaussien $HG_{00}$ (référence 1 sur la figure 8) et un mode de Hermite-Gauss $HG_{01}$ de rang 01 (référence 2 sur la figure 8). Seul le rayonnement gaussien $HG_{00}$ guidé par la fibre est un rayonnement utile. La troisième fibre guide un rayonnement gaussien $HG_{00}$ (référence 4) deux modes de Hermite-Gauss $HG_{02}$, $HG_{01}$ de rangs respectifs 02 et 01 (et de références 3 et 5), tous trois utiles. Enfin la quatrième fibre guide un rayonnement gaussien $HG_{00}$ (de référence 8) et trois modes de Hermite-Gauss $HG_{01}$, $HG_{02}$, $HG_{03}$ de rangs respectifs 01, 02 et 03 (et de références 6, 7 et 9 sur la figure 8). Seul le rayonnement gaussien est utile.

La fibre multimode formant l'étage de sortie est apte à guider 10 modes de Hermite-Gauss, 6 de ces modes étant destinés à recevoir les modes utiles de l'étage d'entrée. Les modes de l'étage de sortie sont également tournés de 45° vis-à-vis de ceux de l'étage d'entrée.

Il n'existe pas de transformation unique à variables séparables permettant de transformer les modes utiles de l'étage d'entrée vers des modes choisis de l'étage de sortie.

Pour résoudre ce problème, on conçoit un dispositif de conversion multiplan pour qu'il réalise successivement trois conversions T1, T2, T3, à l'aide de 3 séries de lames de phase.

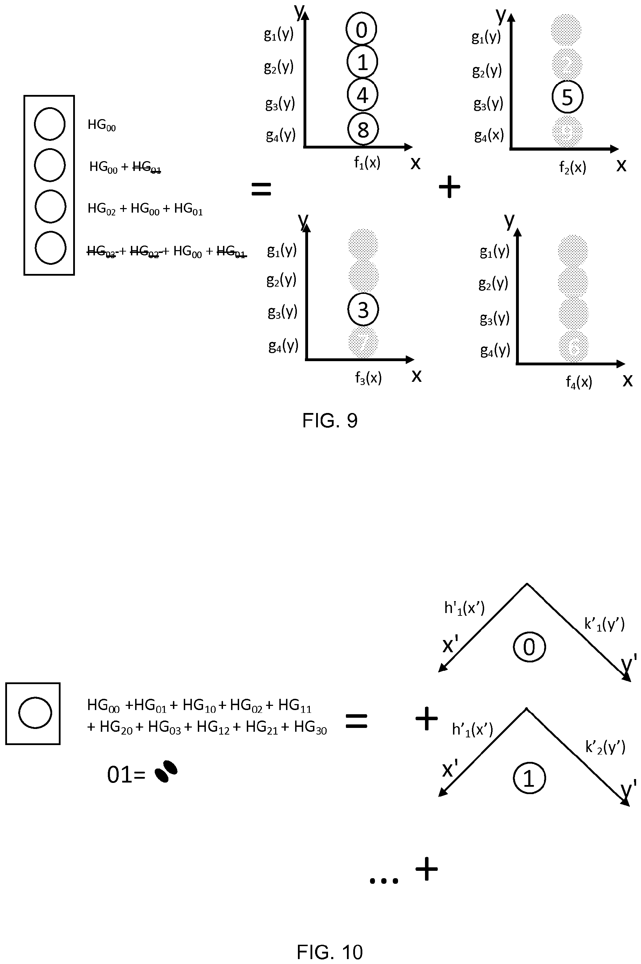

La première conversion T1 est une conversion à variables séparables. La figure 9 représente ainsi la première famille de modes à variables séparables dans un plan de l'étage d'entrée permettant de décomposer le rayonnement incident, et les fonctions $f_i$, $g_j$ formant les fonctions génératrices de cette famille. Ce plan de l'étage d'entrée est muni d'un repère cartésien d'entrée (x,y). Les modes non exploités de cette famille sont présentés grisés sur la figure 9. On a représenté sur la figure 8, l'arrangement sous une forme de carré dans le même repère (x,y) des modes, tous gaussiens, composant la deuxième famille à variables séparables de cette première transformation T1 ainsi que les fonctions génératrices $f'_i$, $g'_j$.

La deuxième conversion T2, n'est pas une conversion à variables séparables, mais forme un réarrangement des modes gaussiens de la deuxième famille de la première transformation, sous une forme de carré dans un second repère (x', y') dans un plan intermédiaire. Ce second repère est tourné de 45° vis-à-vis du première repère dans lequel ont été définies les première et deuxième familles de la première transformation T1. Ce réarrangement peut être quelconque, c'est-à-dire que les modes gaussiens de la deuxième famille de modes de la première transformation peuvent être réarrangés dans n'importe quelle position du carré. Ainsi, dans l'exemple représenté on a inversé les modes 4 et 6 par rapport à l'ordre qui paraissait le plus naturel, au sens de la distance de déplacement de ces modes dans le plan.

Cet agencement en carré de modes gaussiens forme la première famille de modes de la troisième transformation T3. On a présenté sur la figure 8 les fonctions génératrices $h_i$, $k_j$ montrant que cette première famille est bien à variables séparables. La figure 10 représente ainsi la deuxième famille de modes à variables séparables dans un plan de l'étage de sortie, et les fonctions $h'_i$, $k'_j$ formant les fonctions génératrices de cette famille. Ce plan de l'étage de sortie est muni d'un repère cartésien d'entrée (x',y') identique à celui du plan dans lequel on a défini la première famille de modes de la troisième transformation. Tous les modes sont spatialement superposés et les modes non exploités de cette famille sont présentés grisés sur la figure 9.

Le problème initial est ainsi modélisé par l'enchaînement de trois transformations T1, T2, T3. La première et la troisième transformation étant des transformations associant des premières familles à variables séparables vers des deuxièmes familles à variables séparables. Ces transformations peuvent donc être mises en oeuvre avec un nombre réduit de masques de phase, ici 5 masques. La deuxième transformation T2 réarrange les familles de modes entre les deux autres conversions T1, T3, et permet ici, de plus, d'orienter à 45° les modes manipulés par la première transformation vis-à-vis de ceux manipulés par la troisième transformation. Cette deuxième transformation T2 peut être mise en oeuvre par des masques complémentaires, par exemple 2 à 4 masques.

On applique un procédé d'optimisation numérique présenté précédemment pour établir les déphasages de chacun des masques de phase permettant de transformer chaque mode utile du faisceau de fibre vers des modes de la fibre multimode de sortie.

Pour finir, on a montré qu'une transformation opérée par un dispositif MPLC mettait en correspondance les modes d'une première famille de modes avec ceux d'une deuxième famille de modes, les deux familles étant à variables spatiales séparables et les modes mis en correspondance présentant le même indice, pouvait être mise en oeuvre par un nombre réduit de masques de phases.

Les contraintes posées sur les deux familles de modes et sur la correspondance entre les modes de ces familles, conduisent à poser un problème d'optimisation dont les solutions forment une classe de transformations simples à réaliser.

Bien entendu l'invention n'est pas limitée aux modes de mise en oeuvre décrits et on peut y apporter des variantes de réalisation sans sortir du cadre de l'invention tel que défini par les revendications.

**Revendications**

1. Procédé de conception d'un dispositif de conversion multiplan d'un premier rayonnement lumineux, le dispositif mettant en œuvre une pluralité de masques de phase interceptant le rayonnement lumineux pour respectivement lui appliquer un déphasage spatio-fréquentiel conduisant à une transformation déterminée du premier rayonnement lumineux en un deuxième rayonnement lumineux, le procédé de conception comprenant les étapes suivantes :

   - Définir une première famille de modes (u) décrivant le premier rayonnement lumineux, chaque mode ($u_{ij}$) de la première famille étant désigné par un couple d'indices {i, j } $1<=i<=n$, $1<=j<=m$, la première famille ($u_{ij}(x,y)$) étant à variables spatiales (x,y) séparables ;
   - Définir une deuxième famille de modes (v) décrivant le deuxième rayonnement lumineux, et chaque mode de la deuxième famille ($v_{ij}$) étant désigné par un couple d'indices {i,j}, $1<=i<=n$, $1<=j<=m$, la deuxième famille ($v_{ij}(x,y)$) étant à variables spatiales (x, y) séparables ;
   - Former une première et, respectivement, une deuxième famille de modes exploités en sélectionnant N modes de couple d'indices {i, j}$_k$ $1<=k<=N$, N étant inférieur ou égal à n.m et strictement supérieur à n et m, dans la première famille et, respectivement, dans la deuxième famille, les N modes de la deuxième famille n'étant pas des modes d'Hermite-Gauss et, simultanément, les N modes de la première famille n'étant pas arrangés dans un plan en forme de triangle ;
   - Etablir le déphasage spatio-fréquentiel des masques de phase permettant de transformer chaque mode de couple d'indices {i,j}$_k$ de la première famille de modes exploités dans le mode de même couple d'indices {i,j}$_k$ de la deuxième famille de modes exploités.

2. Procédé de conception selon la revendication précédente dans lequel la première famille de modes (u) et la deuxième famille de modes (v) sont des bases orthonormées.

3. Procédé de conception selon l'une des revendications précédentes dans lequel l'établissement du déphasage spatio-fréquentiel des M masques de phase est réalisé en optimisant un degré de correspondance entre la transformation des modes de la première famille de modes exploités et les modes de la deuxième famille de modes exploités.

4. Procédé de conception selon l'une des revendications précédentes dans lequel l'étape visant à établir le déphasage spatio-fréquentiel des masques de phase comprend :

   - Etablir respectivement un déphasage unidimensionnel selon une première variable spatiale (x) et selon une seconde variable spatiale (y) ;
   - Combiner les déphasages unidimensionnels selon la première variable spatiale (x) et selon la seconde variable spatiale (y) pour établir le déphasage spatio-fréquentiel des masques de phase.

5. Procédé de conception selon l'une des revendications précédentes dans lequel la pluralité de masques de phase comprend des masques de phase complémentaires permettant de réarranger spatialement les modes de la première famille de modes exploités ou de la deuxième famille de modes exploités.

6. Programme d'ordinateur comprenant des instructions adaptées à la mise en œuvre d'au moins une des étapes du procédé de conception selon l'une des revendications 1 à 5, lorsque le programme est exécuté sur un ordinateur.

7. Dispositif de conversion multiplan (1) d'un premier rayonnement lumineux, le dispositif comportant un bloc de conversion (2) comprenant une pluralité de pièces optiques (2a, 2b) et mettant en œuvre une pluralité de masques de phase (5) portés par au moins une des pièces optiques (2a, 2b), les masques de phase (5) appliquant un déphasage spatio-fréquentiel visant à élaborer un deuxième rayonnement, la transformation déterminée, dite à variables séparables, mettant respectivement en relation N modes d'indices $\{i, j\}_k$, 1<=k<=N, d'une première famille de modes exploités à variables spatiales (x, y) séparables décrivant le premier rayonnement lumineux au niveau d'un premier plan transverse avec N modes de même indice $\{i, j\}_k$, 1<=k<=N, d'une deuxième famille de modes exploités à variables spatiales séparables décrivant le deuxième rayonnement lumineux au niveau d'un deuxième plan transverse, les N modes de la deuxième famille n'étant pas des modes d'Hermite-Gauss et, simultanément, les N modes de la première famille n'étant pas arrangés dans le premier plan transverse en forme de triangle.

8. Dispositif de conversion multiplan (1) selon la revendication précédente comprenant au moins un étage (3,4) pour injecter le premier et/ou le deuxième rayonnement dans le bloc de conversion (2) et/ou extraire le premier et/ou le deuxième rayonnement du bloc de conversion (2).

9. Dispositif de conversion multiplan (1) selon la revendication précédente dans lequel l'étage (3,4) comprend un faisceau de fibres optiques (3a) arrangées dans un plan transverse d'étage (Pe), le premier plan transverse étant le plan transverse d'étage.

10. Dispositif de conversion multiplan (1) selon la revendication précédente dans lequel le faisceau de fibres optique (3a) de l'étage (3,4) est arrangé dans le plan transverse d'étage (Pe) en forme de rectangle ou de carré.

11. Dispositif de conversion multiplan (1) selon l'une des revendications 8 à 10 dans lequel l'étage (4) comprend au moins une fibre multimode (4a).

12. Dispositif de conversion multiplan (1) selon l'une des revendications 7 à 11 dans lequel au moins une des pièces optiques (2a, 2b) porte au moins un masque de phase (5) à variables spatiales (x, y) séparables.

13. Dispositif de conversion multiplan (1) selon l'une des revendications 7 à 12 dans lequel les pièces optiques (2a, 2b) comprennent deux pièces optiques réfléchissantes (2a, 2b) disposées en vis-à-vis l'une de l'autre, les masques de phases (5) étant portés par l'une et/ou l'autres des deux pièces optiques réfléchissantes (2a, 2b).

14. Dispositif de conversion multiplan (1) selon la revendication précédente dans lequel les deux pièces optiques (2a, 2b) sont constituées d'une lame de phase microstructurée (2a) et d'un miroir (2b), et les masques de phase (5) sont portés par la lame de phase microstructurée (2a).

**Patentansprüche**

1. Verfahren zum Entwerfen einer Vorrichtung für eine Mehrebenenumwandlung einer ersten Lichtstrahlung, wobei die Vorrichtung eine Vielzahl von Phasenmasken implementiert, die die Lichtstrahlung zum Anwenden jeweils darauf einer Raum-Frequenz-Phasenverschiebung abfangen, die zu einer bestimmten Transformation der ersten Lichtstrahlung in eine zweite Lichtstrahlung führt, das Entwurfsverfahren umfassend die folgenden Schritte:

   - Definieren einer ersten Familie von Modi (u), die die erste Lichtstrahlung beschreiben, wobei jeder Modus ($u_{ij}$) der ersten Familie durch ein Indexpaar $\{i, j\}$ $1<=i<=n$, $1<=j<=m$, bezeichnet wird, wobei die erste Familie ($u_{ij}(x, y)$) mit trennbaren räumlichen Variablen $(x, y)$ ist;
   - Definieren einer zweiten Familie von Modi (v), die die zweite Lichtstrahlung beschreiben, und wobei jeder Modus der zweiten Familie ($v_{ij}$) durch ein Indexpaar $\{i, j\}$, $1<=i<=n$, $1<=j<=m$, bezeichnet wird, wobei die zweite Familie ($v_{ij}(x, y)$) mit trennbaren räumlichen Variablen $(x, y)$ ist;
   - Ausbilden einer ersten beziehungsweise einer zweiten Familie von genutzten Modi, indem N Modi des Indexpaars $\{i, j\}_k$ $1<=k<=N$, wobei N kleiner als oder gleich n.m und strikt größer als n und als m ist, aus der ersten Familie beziehungsweise der zweiten Familie ausgewählt werden, wobei die N Modi der zweiten Familie keine Hermite-Gauß-Modi sind und gleichzeitig die N Modi der ersten Familie nicht in einer Ebene in Dreieckform angeordnet sind;
   - Festlegen der Raum-Frequenz-Phasenverschiebung der Phasenmasken, die es ermöglicht, jeden Modus des Indexpaars $\{i, j\}_k$ der ersten Familie von genutzten Modi in den Modus desselben Indexpaars $\{i, j\}_k$ der zweiten Familie von genutzten Modi zu transformieren.

2. Entwurfsverfahren nach dem vorstehenden Anspruch, wobei die erste Familie von Modi (u) und die zweite Familie von Modi (v) orthonormierte Basen sind.

3. Entwurfsverfahren nach einem der vorstehenden Ansprüche, wobei das Festlegen der Raum-Frequenz-Phasenverschiebung der M Phasenmasken durchgeführt wird, indem ein Übereinstimmungsgrad zwischen der Transformation der Modi der ersten Familie von genutzten Modi und den Modi der zweiten Familie von genutzten Modi optimiert wird.

4. Entwurfsverfahren nach einem der vorstehenden Ansprüche, wobei der Schritt, der darauf abzielt, die Raum-Frequenz-Phasenverschiebung der Phasenmasken festzulegen, umfasst:

   - Festlegen einer eindimensionalen Phasenverschiebung gemäß einer ersten räumlichen Variablen (x) und gemäß einer zweiten räumlichen Variablen (y);
   - Kombinieren der eindimensionalen Phasenverschiebungen gemäß der ersten räumlichen Variablen (x) und gemäß der zweiten räumlichen Variablen (y) zum Festlegen der Raum-Frequenz-Phasenverschiebung der Phasenmasken.

5. Entwurfsverfahren nach einem der vorstehenden Ansprüche, wobei die Vielzahl von Phasenmasken komplementäre Phasenmasken umfasst, die es ermöglichen, die Modi der ersten Familie von genutzten Modi oder der zweiten Familie von genutzten Modi räumlich neu anzuordnen.

6. Computerprogramm, umfassend Anweisungen, die angepasst sind, um mindestens einen der Schritte des Entwurfsverfahrens nach einem der Ansprüche 1 bis 5 zu implementieren, wenn das Programm auf einem Computer ausgeführt wird.

7. Vorrichtung für die Mehrebenenumwandlung (1) einer ersten Lichtstrahlung, wobei die Vorrichtung einen Umwandlungsblock (2) aufweist, der eine Vielzahl von optischen Teilen (2a, 2b) umfasst und eine Vielzahl von Phasenmasken (5) implementiert, die durch mindestens eines der optischen Teile (2a, 2b) getragen werden, wobei die Phasenmasken (5) eine Raum-Frequenz-Phasenverschiebung anwenden, die darauf abzielt, eine zweite Strahlung zu erstellen, wobei die sogenannte bestimmte Transformation mit trennbaren Variablen jeweils N Modi der Indizes $\{i, j\}_k$, $1<=k<=N$, einer ersten Familie von genutzten Modi mit trennbaren räumlichen Variablen $(x, y)$, die die erste Lichtstrahlung auf der Ebene einer ersten Transversalebene beschreiben, mit N Modi desselben Index $\{i, j\}_k$, $1<=k<=N$, einer zweiten Familie von genutzten Modi mit trennbaren räumlichen Variablen in Beziehung setzt, die die zweite Lichtstrahlung auf einer zweiten Transversalebene beschreiben, wobei die N Modi der zweiten Familie keine Hermite-Gauß-Modi sind und gleichzeitig die N Modi der ersten Familie in der ersten Transversalebene nicht in Dreieckform angeordnet sind.

**8.** Mehrebenenumwandlungsvorrichtung (1) nach dem vorstehenden Anspruch, umfassend mindestens eine Stufe (3, 4) zum Injizieren der ersten und/oder der zweiten Strahlung in den Umwandlungsblock (2) und/oder Extrahieren der ersten und/oder der zweiten Strahlung aus dem Umwandlungsblock (2).

**9.** Mehrebenenumwandlungsvorrichtung (1) nach dem vorstehenden Anspruch, wobei die Stufe (3, 4) ein Bündel von Lichtleitfasern (3a) umfasst, die in einer Stufentransversalebene (Pe) angeordnet sind, wobei die erste Transversalebene die Stufentransversalebene ist.

**10.** Mehrebenenumwandlungsvorrichtung (1) nach dem vorstehenden Anspruch, wobei das Bündel von Lichtleitfasern (3a) der Stufe (3, 4) in der Stufentransversalebene (Pe) in Rechteck- oder Quadratform angeordnet ist.

**11.** Mehrebenenumwandlungsvorrichtung (1) nach einem der Ansprüche 8 bis 10, wobei die Stufe (4) mindestens eine Mehrmodenfaser (4a) umfasst.

**12.** Mehrebenenumwandlungsvorrichtung (1) nach einem der Ansprüche 7 bis 11, wobei mindestens eines der optischen Teile (2a, 2b) mindestens eine Phasenmaske (5) mit trennbaren räumlichen Variablen (x, y) trägt.

**13.** Mehrebenenumwandlungsvorrichtung (1) nach einem der Ansprüche 7 bis 12, wobei die optischen Teile (2a, 2b) zwei reflektierende optische Teile (2a, 2b) umfassen, die einander gegenüberliegend eingerichtet sind, wobei die Phasenmasken (5) durch das eine und/oder das andere der zwei reflektierenden optischen Teile (2a, 2b) getragen werden.

**14.** Mehrebenenumwandlungsvorrichtung (1) nach dem vorstehenden Anspruch, wobei die zwei optischen Teile (2a, 2b) aus einer mikrostrukturierten Phasenplatte (2a) und aus einem Spiegel (2b) bestehen, und die Phasenmasken (5) durch die mikrostrukturierte Phasenplatte (2a) getragen werden.

**Claims**

**1.** Method for designing a device for multi-plane conversion of first light radiation, the device implementing a plurality of phase masks which intercept the light radiation in order to apply to this light radiation a space-frequency phase shift leading to a predetermined transformation of the first light radiation into second light radiation, the design method comprising the following steps:

- defining a first mode family (u) which describes the first light radiation, each mode ($u_{ij}$) of the first family being designated by a pair of indexes {i, j} l<=i<=n, l<=j<=m, the first family ($u_{ij}(x, y)$) having separable spatial variables (x, y);
- defining a second mode family (v) which describes the second light radiation, and each mode of the second family ($v_{ij}$) being designated by a pair of indexes {i,j}, l<=i<=n, l<=j<=m, the second family ($v_{ij}(x, y)$) having separable spatial variables (x, y);
- forming a first and a second used mode family, respectively, by selecting N modes of index pairs {i, j}$_k$ l<=k<=N, N being less than or equal to n.m and strictly greater than n and than m in the first family and in the second family, respectively, the N modes of the second family not being Hermite-Gaussian modes and, simultaneously, the N modes of the first family not being arranged in a plane in the shape of a triangle;
- establishing the space-frequency phase shift of the phase masks that allows each mode of index pairs {i,j}$_k$ from the first used mode family to be transformed into the mode of the same index pair {i,j}$_k$ from the second used mode family.

**2.** Design method according to the preceding claim, wherein the first mode family (u) and the second mode family (v) are orthonormal bases.

**3.** Design method according to either of the preceding claims, wherein the space-frequency phase shift of the M phase masks is established by optimizing a degree of matching between the transformation of the modes of the first used mode family and the modes of the second used mode family.

**4.** Design method according to any of the preceding claims, wherein the step of establishing the space-frequency phase shift of the phase masks comprises:

- establishing a one-dimensional phase shift according to a first spatial variable (x) and according to a second spatial variable (y);
- combining the one-dimensional phase shifts according to the first spatial variable (x) and according to the second spatial variable (y) to establish the space-frequency phase shift of the phase masks.

5. Design method according to any of the preceding claims, wherein the plurality of phase masks comprises complementary phase masks that allow the modes of the first used mode family or the second used mode family to be spatially rearranged.

6. Computer program comprising instructions which are suitable for implementing at least one of the steps of the design method according to any of claims 1 to 5 when the program is executed on a computer.

7. Device (1) for multi-plane conversion of first light radiation, the device including a conversion block (2) comprising a plurality of optical parts (2a, 2b) and implementing a plurality of phase masks (5) which are supported by at least one of the optical parts (2a, 2b), the phase masks (5) applying a space-frequency phase shift for generating second radiation, the predetermined transformation, referred to as a transformation with separable variables, linking N modes of index $\{i,j\}_k$, $l<=k<=N$, from a first used mode family having separable spatial variables (x, y) which describe the first light radiation at a first transverse plane with N modes of the same index $\{i,j\}_k$, $l<=k<=N$, from a second used mode family having separable spatial variables which describe the second light radiation at a second transverse plane, the N modes of the second family not being Hermite-Gaussian modes and, simultaneously, the N modes of the first family not being arranged in the first transverse plane in the shape of a triangle.

8. Multi-plane conversion device (1) according to the preceding claim, comprising at least one stage (3, 4) for injecting the first and/or the second radiation into the conversion block (2) and/or extracting the first and/or the second radiation from the conversion block (2).

9. Multi-plane conversion device (1) according to the preceding claim, wherein the stage (3, 4) comprises a bundle of optical fibers (3a) which are arranged in a transverse stage plane (De), the first transverse plane being the transverse stage plane.

10. Multi-plane conversion device (1) according to the preceding claim, wherein the bundle of optical fibers (3a) for the stage (3, 4) is arranged in the transverse plane (De) in the shape of a rectangle or a square.

11. Multi-plane conversion device (1) according to any of claims 8 to 10, wherein the stage (4) comprises at least one multimode fiber (4a).

12. Multi-plane conversion device (1) according to any of claims 7 to 11, wherein at least one of the optical parts (2a, 2b) supports at least one phase mask (5) having separable spatial variables (x, y).

13. Multi-plane conversion device (1) according to any of claims 7 to 12, wherein the optical parts (2a, 2b) comprise two reflective optical parts
(2a, 2b) which are arranged opposite one another, the phase masks (5) being supported by one and/or the other of the two reflective optical parts (2a, 2b).

14. Multi-plane conversion device (1) according to the preceding claim, wherein the two optical parts (2a, 2b) are made up of a microstructured phase plate (2a) and a mirror (2b), and the phase masks (5) are supported by the microstructured phase plate (2a).

FIG.1

FIG. 2

Définir les familles de modes

$u_{ij}(x,y)=f_i(x).g_j(y)$
$v_{ij}(x,y)=f'_i(x).g'_j(y)$

Choisir N modes exploités
d'indice {i,j} pour former
les familles de modes exploités

Etablir les déphasages,
pour chaque masque l,
$\phi_l(x,y)$ tel que
$u_{ij}(x,y) \rightarrow v_{ij}(x,y)$ pour
tout couple i, j

FIG. 3

FIG. 4

FIG. 5a

FIG. 5b

$E(x,y) = k0\ E_{00}(x,y) + k_1\ E_{01}(x,y) ...+ k_8\ E_{33}(x,y)$

FIG. 6

FIG. 7

FIG. 8

HG$_{00}$

HG$_{00}$ + ~~HG$_{01}$~~

HG$_{02}$ + HG$_{00}$ + HG$_{01}$

~~HG$_{03}$~~ + ~~HG$_{02}$~~ + HG$_{00}$ + ~~HG$_{01}$~~

01= ●●

T1.

T2.

T3.

g'$_1$(y) ⓪
g'$_2$(y) ①
g'$_3$(y) ③ ④ ⑤
g'$_4$(y) ⑧

f'$_4$(x)  f'$_3$(x)  f'$_1$(x)  f'$_2$(x) X

y

x'

h$_1$(x') ⓪ k$_1$(y')
h$_2$(x') ① k$_2$(y')
h$_3$(x') ③ ⑤ k$_3$(y')
h$_4$(x') ④ ⑧ k$_4$(y')

y'

01= ●●

HG$_{00}$ ~~HG$_{01}$~~ HG$_{10}$
HG$_{02}$ ~~HG$_{11}$~~ HG$_{20}$ HG$_{03}$
~~HG$_{12}$~~ ~~HG$_{21}$~~ HG$_{30}$

FIG. 9

FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9250454 B
- US 2017010463 A
- WO 2012085046 A

**Littérature non-brevet citée dans la description**

- **MORIZUR.** Programmable unitary spatial mode manipulation. *Al, J. Opt. Soc. Am. A,* Novembre 2010, vol. 27 (11
- **N. FONTAINE.** *Design of High Order Mode-Multiplexers using Multiplane Light Conversion*
- **PAULINE BOUCHER ; NICOLAS BARRÉ ; OLIVIER PINEL ; GUILLAUME LABROILLE ; NICOLAS TREPS.** Continuous axial scanning of a Gaussian beam via beam steering. *Opt. Express,* 2017, vol. 25, 23060-23069
- **R. SAAD et al.** Highly Sélective 7 Orbital Angular Momentum Mode Multiplexer Based on Multi-Plane Light Conversion. *2017 European Conférence on Optical Communication (ECOC), Gothenburg,* 2017, 1-3
- Design of High Order Mode-Multiplexers using Multiplane Light Conversion. **FONTAINE NICOLAS K et al.** 2017 EUROPEAN CONFERENCE ON OPTICAL COMMUNICATION (ECOC). IEEE, 17 Septembre 2017, 1-3
- **GUILLAUME LABROILLE.** Efficient and mode-sélective spatial mode multiplexer based on multi-plane light conversion. *Optics Express,* 30 Juin 2014, vol. 22 (13), 15599
- **V. DELAUBERT.** Quantum measurements of spatial conjugate variables: displacement and tilt of a Gaussian beam. *Optics Letters,* 2006, vol. 31 (10), 1537-1539
- **LENGLÉ, K. et al.** $4 \times$ 10 Gbit/s bidirectional transmission over 2 km of conventional graded-index OM1 multimode fiber using mode group division multiplexing. *Optics express,* 2016, vol. 24 (25), 28594-28605